# EUROPÄISCHE PATENTANMELDUNG

(11) **EP 3 701 843 A1**
(43) Veröffentlichungstag der Anmeldung: **02.09.2020**
(21) Anmeldenummer: 20157191.6
(22) Anmeldetag: 13.02.2020
(51) Int. Cl.: A47J 31/60

(54) **GETRÄNKEAUTOMAT**

(30) Priorität: 01.03.2019 DE 102019202814
(71) Anmelder: BSH Hausgeräte GmbH, 81739 München (DE)
(72) Erfinder: Mies, Maximilian, 83253 Rimsting (DE); Steffl, Michael, 83250 Marquartstein (DE); Beck, Rudolf, 84518 Garching a. d. Alz (DE)

(57) **Zusammenfassung**

Die vorliegende Erfindung betrifft einen Getränkeautomaten (1) mit einem Fluidsystem (2), welches eine Wasserquelle (3) mit einer Ausgabestelle (4) zur Ausgabe eines Getränks verbindet. Erfindungsgemäß weist der Getränkeautomat (1) einen Behandlungsmittelbehälter (11) auf, in welchem ein festes Behandlungsmittel (13) bevorratet ist und welcher über einen Behälteranschluss (17) mit einem Behandlungsabschnitt (19) des Fluidsystems (2) verbunden ist, wobei eine Ventileinrichtung (27) des Getränkeautomaten (1) in verschiedenen Stellungen eine Strömung von Wasser (7) zum Behandlungsmittel (13) zum Bilden einer Lösung und ein Einbringen der Lösung in das Fluidsystem (2) erlaubt. Somit lässt sich eine Behandlung des Fluidsystems (2) komfortabel und zuverlässig realisieren.

Die Erfindung betrifft des Weiteren einen solchen Behandlungsmittelbehälter (11) sowie ein Verfahren zum Betreiben eines solchen Getränkeautomaten (1).

## Beschreibung

Die vorliegende Erfindung betrifft einen Getränkeautomaten, insbesondere einen Kaffeeautomaten, mit einem Fluidsystem, welches eine Wasserquelle fluidisch mit einer Ausgabestelle des Getränkeautomaten verbindet. Die Erfindung betrifft des Weiteren einen Behandlungsmittelbehälter für einen solchen Getränkeautomaten sowie ein Verfahren zum Betreiben eines solchen Getränkeautomaten.

Ein Getränkeautomat weist ein Fluidsystem auf, das eine Wasserquelle, beispielsweise einen Wassertank, fluidisch mit einer Ausgabestelle des Getränkeautomaten verbindet. Im Regelbetrieb des Getränkeautomaten strömt Wasser durch das Fluidsystem und wird über die Ausgabestelle ausgegeben. Dabei können im Fluidsystem Bestandteile des Getränkeautomaten angeordnet sein, welche das Wasser temperieren und/oder mit denen das Wasser zum Zubereiten eines Getränks, insbesondere Heißgetränks, eingesetzt wird. Derartige Getränkeautomaten können also insbesondere ein Heißgetränkeautomat, beispielsweise ein Kaffeeautomat, sein.

Um den Betrieb des Getränkeautomaten über eine verlängerte Lebensdauer sicherzustellen und/oder aus Hygienegründen ist es in der Regel notwendig, das Fluidsystem des Getränkeautomaten zu behandeln. Zu derartigen Behandlungen gehören das Entkalken des Fluidsystems und/oder besagter Bestandteile des Getränkeautomaten sowie eine Reinigung des Fluidsystems und/oder besagter Bestandteile. Zu diesem Zweck kann ein Nutzer des Getränkeautomaten, insbesondere nach einer entsprechenden Aufforderung durch den Getränkeautomaten, ein Behandlungsmittel manuell in das Fluidsystem einbringen. Bekannt ist es, dass ein Nutzer des Getränkeautomaten ein Entkalkungsmittel und/oder Reinigungsmittel, insbesondere in flüssiger oder fester Form, in einem Wassertank oder einer Brüheinheit des Getränkeautomaten einbringt, den Wassertank mit Wasser auffüllt, um eine Lösung herzustellen und anschließend einen Behandlungsbetrieb des Getränkeautomaten zum Behandeln des Fluidsystems bzw. besagter Bestandteile manuell startet. Somit ist ein Mitwirken des Nutzers notwendig, so dass mit dem Behandeln des Fluidsystems entsprechende Komforteinbußen einhergehen. Darüber hinaus kann der Nutzer durch Ignorieren der notwendigen Behandlung des Fluidsystems zu Beschädigungen des Getränkeautomaten und/oder eine unzureichende Hygiene beitragen. Die Komforteinbußen werden dadurch verstärkt, dass nach dem Behandeln des Fluidsystems ein Durchspülen des Fluidsystems mit Wasser in der Regel notwendig ist, das wiederum eine Handlung durch den Nutzer, nämlich das erneute Auffüllen des Wassertanks mit Wasser, erfordert.

Aus der DE 10 2015 105 460 A1 ist ein Getränkeautomat mit einem Wassertank und einem separaten Vorratsbehälter bekannt, in dem ein wasserlösliches Entkalkungsmittel aufgenommen ist. Zum Entkalken des Fluidsystems des Getränkeautomaten wird der Vorratsbehälter über eine hierfür eigens vorgesehene Pumpe über einen Einlass mit Wasser aufgefüllt, so dass sich eine Lösung aus Wasser und Entkalkungsmittel bildet. Diese Lösung wird über einen Auslass des Vorratsbehälters aus dem Vorratsbehälter gefördert, um das Fluidsystem des Getränkeautomaten zu entkalken.

Die vorliegende Erfindung beschäftigt sich mit der Aufgabe, für einen Getränkeautomaten der eingangs genannten Art sowie für einen Behandlungsmittelbehälter eines solchen Getränkeautomaten und für ein Verfahren zum Betreiben eines solchen Getränkeautomaten verbesserte oder zumindest alternative Ausführungsformen anzugeben, die sich insbesondere durch einen erhöhten Komfort und/oder einen vereinfachten Aufbau und/oder eine erhöhte Lebensdauer des Getränkeautomaten auszeichnen.

Diese Aufgabe wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, ein Fluidsystem eines Getränkeautomaten mit einem Behandlungsabschnitt zu versehen, mit dem ein Behandlungsmittelbehälter, in dem ein Behandlungsmittel bevorratet ist, verbunden ist und mit einer Fördereinrichtung und einer Ventileinrichtung sowohl Wasser zum Herstellen einer das Behandlungsmittel enthaltenden Lösung in Richtung des Behandlungsbehälters zu fördern als auch die Lösung in das Fluidsystem einzubringen, um das Fluidsystem zu behandeln. Der somit an das Fluidsystem angeschlossene Behandlungsmittelbehälter erlaubt eine automatisierte Behandlung des Fluidsystems, so dass der Komfort für einen Nutzer des Getränkeautomaten erhöht wird. Darüber hinaus kann die Behandlung des Fluidsystems bei Bedarf automatisiert gestartet werden, so dass entsprechende Beschädigungen und/oder Verunreinigungen des Getränkeautomaten, insbesondere des Fluidsystems, zumindest reduziert werden, so dass ein Regelbetrieb des Getränkeautomaten über eine verlängerte Dauer sichergestellt ist. Somit wird also insbesondere die Lebensdauer des Getränkeautomaten erhöht. Darüber hinaus lässt sich der Getränkeautomat auf diese Weise vereinfacht umsetzen.

Dem Erfindungsgedanken entsprechend weist der Getränkeautomat das Fluidsystem auf, welches eine Wasserquelle fluidisch mit einer Ausgabestelle des Getränkeautomaten verbindet. Über die Ausgabestelle wird im normalen Betrieb des Getränkeautomaten, nachfolgend auch Regelbetrieb genannt, ein Getränk ausgegeben. Der Behandlungsmittelbehälter, nachfolgend auch kurz Behälter genannt, ist von der Wasserquelle separat und weist einen Anschluss auf, der nachfolgend auch als Behälteranschluss bezeichnet wird und über den eine Aufnahmekammer des Behälters fluidisch mit einem Behandlungsabschnitt des Fluidsystems verbunden ist, um eine fluidische Verbindung des Behälters mit dem Fluidsystem herzustellen. Der Getränkeautomat weist ferner die Fördereinrichtung auf, mit der im Regelbetrieb des Getränkeautomaten Wasser aus der Wasserquelle gefördert und zur Ausgabestelle geführt wird. In der Aufnahmekammer des Behälters ist zumindest ein festes Behandlungsmittel, das heißt in fester Form, zum Behandeln des Fluidsystems bevorratet. Die Ventileinrichtung ist derart ausgestaltet, dass sie den Behandlungsabschnitt fluidisch steuert, das heißt durch Verstellen zumindest einen Strömungspfad im Behandlungsabschnitt freigibt und sperrt. Erfindungsgemäß ist die Ventileinrichtung dabei zwischen einer Einlassstellung und einer Auslassstellung verstellbar. In der Einlassstellung der Ventileinrichtung wird eine fluidische Verbindung zwischen dem Behandlungsbehälter und der Wasserquelle derart hergestellt, dass die Fördereinrichtung Wasser aus der Wasserquelle zum Behandlungsmittel fördert, so dass sich in einer Mischkammer eine Lösung aus Wasser und Behandlungsmittel bildet. In der Auslassstellung der Ventileinrichtung wird eine fluidische Verbindung zwischen der Mischkammer und dem Fluidsystem derart hergestellt, dass die Fördereinrichtung die Lösung aus der Mischkammer in das Fluidsystem fördert, um das Fluidsystem zu behandeln.

Über die Ausgabestelle wird im Regelbetrieb ein Getränk ausgegeben. Zu diesem Zweck kann das aus der Wasserquelle stammende Wasser temperiert, das heißt gekühlt und/oder geheizt, werden. Ebenso kann das Wasser zum Herstellen eines Getränks einem Ausgangsstoff, beispielsweise Kaffee, Tee und dergleichen, zugeführt werden. Hierzu kann der Getränkeautomat entsprechende Bestandteile, beispielsweise einen Heizer, einen Kühler, eine Brühkammer und dergleichen, aufweisen, welche im Fluidsystem eingebunden sind. Zweckmäßig wird bei der Behandlung des Fluidsystems auch zumindest ein solcher Bestandteil behandelt.

Unter Behandeln sind vorliegend im Betrieb des Getränkeautomaten notwendige und/oder vorgegebene Maßnahmen zu verstehen, die zu einem Reinigen und/oder Entfernen von Ablagerungen des Fluidsystems mit Hilfe des Behandlungsmittels führen. Unter Behandlung ist also insbesondere das Reinigen und/oder Entkalken des Fluidsystems zu verstehen. Dementsprechend handelt es sich bei dem Behandlungsmittel um ein festes Reinigungsmittel und/oder ein festes Entkalkungsmittel, welches mit Wasser eine Entkalkungslösung und/oder eine Reinigungslösung bildet.

Vorteilhaft erfolgt über denselben Behälteranschluss des Behälters sowohl die Zuführung von Wasser zur Aufnahmekammer als auch ein Abführen aus der Aufnahmekammer. Das heißt insbesondere, dass der Behälteranschluss lediglich eine Öffnung oder eine Gruppe von Öffnungen aufweisen kann, durch welche sowohl Wasser in den Behälter strömt als auch Behandlungsmittel enthaltendes Wasser aus dem Behälter strömt. Auf diese Weise ist lediglich ein Behälteranschluss notwendig, so dass der Behälter und der Behandlungsabschnitt vereinfacht und kostengünstig umgesetzt werden können.

Vorteilhaft sind Ausführungsformen, bei denen Behälteranschluss zumindest eine Öffnung aufweist, über welche die Aufnahmekammer mit dem Behandlungsabschnitt verbunden ist. Vorteilhaft weist der Behälter ferner eine Sicherung auf, die derart ausgestaltet ist, dass sie die zumindest eine Öffnung nur beim mit dem Behandlungsabschnitt verbundenen Zustand des Behälters freigibt und im Übrigen verschließt. Dies führt insbesondere dazu, dass kein unbeabsichtigter Verlust des Behandlungsmittels auftreten kann. Zudem werden hierdurch unerwünschte Wechselwirkungen des Behandlungsmittels mit der Umgebung, insbesondere mit Luft, zumindest reduziert. Die Sicherung kann insbesondere einen Klappmechanismus aufweisen. Vorstellbar ist auch eine Sicherung, die in der Art eines Piercers ausgestaltet ist, derart, dass beim Anschließen des Behälters an den Behandlungsabschnitt der Behälteranschluss geöffnet, insbesondere durchstochen, wird. Ebenso ist es vorstellbar, die Sicherung mit einem Rückschlagventil zu versehen.

Die Ventileinrichtung ist zweckmäßig ferner in einer Neutralstellung verstellbar, in welchem eine fluidische Verbindung des Behälters, vorzugsweise auch der Mischkammer, zur Ausgabestelle unterbrochen ist. Die Ventileinrichtung ist dabei im Regelbetrieb des Getränkeautomaten in der Neutralstellung verstellt, derart, dass kein Wasser zum Behandlungsmittel gelangt.

In einem Betriebsverfahren des Getränkeautomaten wird in einem Behandlungsbetrieb, in dem ein Behandeln des Fluidsystems erfolgt, ein vorgegebenes Volumen Wasser gefördert und mit dem Behandlungsmittel in Kontakt gebracht, so dass sich die Lösung aus Wasser und Behandlungsmittel mit einem vorgegebenen Anteil von Behandlungsmittel in der Mischkammer bildet. Die Lösung wird anschließend in das Fluidsystem gefördert, um das Fluidsystem zu behandeln. Dies erfolgt durch eine Wechselwirkung der Lösung mit dem Fluidsystem, wobei die Wechselwirkung vorteilhaft für eine vorgegebene Dauer erfolgt, bevor die Lösung aus dem Fluidsystem, insbesondere über die Ausgabestelle, abgelassen wird.

Vorteilhaft erfolgt auch das Ablassen der Lösung aus dem Fluidsystem mit der Fördereinrichtung. Das Ablassen erfolgt dabei vollständig, derart, dass keine Reste der Lösung, insbesondere des Behandlungsmittels, in dem Fluidsystem verbleiben.

Bevorzugt wird nach der Behandlung des Fluidsystems mit der Lösung eine Spülung des Fluidsystems mit Wasser durchgeführt, um auch Reste der Lösung, insbesondere des Behandlungsmittels, aus dem Fluidsystem zu entfernen.

Nach dem Behandeln des Fluidsystems im Behandlungsbetrieb kehrt das Verfahren in den Regelbetrieb des Getränkeautomaten zurück, in welchem Getränke über die Ausgabestelle ausgegeben werden.

Der Behandlungsbetrieb kann hierbei manuell durch einen Nutzer ausgelöst und im Übrigen automatisiert durchgeführt werden.

Vorstellbar ist es auch, den Behandlungsbetrieb in regelmäßigen Abständen durchzuführen. Insbesondere ist es vorstellbar, den Behandlungsbetrieb in Phasen des Getränkeautomaten durchzuführen, in denen keine Getränke ausgegeben werden. Insbesondere ist es vorstellbar, den Behandlungsbetrieb über Nacht durchzuführen. Ebenso ist es vorstellbar, eine notwendige Behandlung des Fluidsystems automatisch zu erkennen und die notwendige Behandlung automatisiert anzuzeigen und/oder durchzuführen. Hierzu kann der Getränkeautomat mit einer entsprechenden Sensorik ausgestattet sein.

Zum Durchführen des Verfahrens weist der Getränkeautomat eine Steuereinrichtung auf, welche mit der Fördereinrichtung und der Ventileinrichtung kommuniziert verbunden und zum Durchführen des Verfahrens ausgestaltet ist.

In der Auslassstellung der Ventileinrichtung erfolgt vorteilhaft ein vollständiges Absaugen der Lösung aus der Mischkammer. Hierdurch erfolgt eine effiziente Nutzung des Behandlungsmittels. Darüber hinaus wird vermieden, dass Wasserreste in dem Behälter mit dem Behandlungsmittel in Kontakt stehen, oder eine entsprechende Gefahr zumindest reduziert, so dass der Verbrauch des Behandlungsmittels wiederum reduziert wird und/oder keine Wechselwirkung mit dem Behälter und/oder dem Behandlungsabschnitt stattfindet.

Bei der Wasserquelle kann es sich um eine solche des Getränkeautomaten handeln, in der Wasser bevorratet wird. Die Wasserquelle kann insbesondere ein Wassertank des Getränkeautomaten sein, der mit Wasser befüllbar ist. Alternativ oder zusätzlich kann es sich bei der Wasserquelle um eine vom Getränkeautomaten externe Wasserquelle, insbesondere um einen Festwasseranschluss, handeln.

Bei bevorzugten Ausführungsformen wird die Mischkammer vom Behandlungsmittel begrenzt. Dies erfolgt derart, dass das Behandlungsmittel in der Einlassstellung der Ventileinrichtung, in der Wasser mit der Fördereinrichtung zum Behandlungsmittel gefördert wird, das Behandlungsmittel lediglich stirnseitig mit dem Wasser in Kontakt steht und im Übrigen zum Wasser beabstandet ist. In dem entsprechenden Kontaktbereich zwischen Wasser und Behandlungsmittel wird also das feste Behandlungsmittel abgelöst, um die Lösung herzustellen, wobei außerhalb des Kontaktbereichs kein Ablösen und Vermischen des Behandlungsmittels mit Wasser erfolgt. Mit anderen Worten, es erfolgt kein Befüllen der Aufnahmekammer mit Wasser. Auf diese Weise wird insbesondere vermieden, dass das gesamte Behandlungsmittel angefeuchtet wird, so dass die Lebensdauer des Behandlungsmittels erhöht ist. Ebenso werden somit durch unerwünschtes Anfeuchten des Behandlungsmittels reduzierte Wirkungen des Behandlungsmittels vermieden oder zumindest reduziert, so dass insgesamt die Effizienz der Behandlung des Fluidsystems verbessert wird.

Bei vorteilhaften Ausführungsformen ist in der Mischkammer ein durchströmbares Gitter angeordnet, auf dem das Behandlungsmittel aufliegt. Somit wird eine einfache Umsetzung des lediglich stirnseitigen Kontakts des Behandlungsmittels mit Wasser zum Herstellen bzw. Bilden der Lösung erreicht. Dabei begrenzt das Gitter vorteilhaft die Mischkammer oder ist zumindest randseitig der Mischkammer angeordnet, um lediglich in unmittelbar am Gitter angrenzenden Bereich einen Kontakt zwischen Wasser und Behandlungsmittel zu erlauben. Das Gitter wirkt also als ein Sieb, welches das feste Behandlungsmittel zurückhält.

Bevorzugt ist es dabei, wenn der Behandlungsbetrieb derart erfolgt, dass nach der Behandlung die Mischkammer frei von der Lösung ist. Die Lösung wird also vorteilhaft gänzlich aus der Mischkammer gefördert. Das Gitter sorgt dafür, dass das Behandlungsmittel zum Behälteranschluss beabstandet ist, so dass im Regelbetrieb kein Behandlungsmittel in das Fluidsystem gelangen kann.

Das Fluidsystem weist zweckmäßig einen Hauptkanal auf, durch welchen Wasser im Regelbetrieb des Getränkeautomaten strömt und in welcher vorteilhaft die Fördereinrichtung angeordnet ist. In dem Hauptkanal sind vorteilhaft besagte weitere Bestandteile des Getränkeautomaten, das heißt insbesondere der Heizer und/oder der Kühler und/oder die Brühkammer, eingebunden.

Vorstellbar sind Ausführungsformen, bei denen der Behandlungsabschnitt einen Einlasskanal sowie einen Auslasskanal aufweist, welche mit dem Hauptkanal des Fluidsystems verbunden sind. Die fluidische Verbindung vom Hauptkanal mit dem Einlasskanal und/oder dem Auslasskanal erfolgt bevorzugt über die Ventileinrichtung, so dass die fluidische Verbindung zwischen dem Hauptkanal und dem Einlasskanal sowie dem Auslasskanal jeweils mit der Ventileinrichtung hergestellt und getrennt werden kann. Insbesondere ist der Hauptkanal in der Einlassstellung der Ventileinrichtung mit dem Einlasskanal verbunden und vorzugsweise vom Auslasskanal getrennt. Insbesondere ist der Hauptkanal in der Auslassstellung der Ventileinrichtung mit dem Auslasskanal verbunden und vorzugsweise vom Einlasskanal getrennt. Somit wird der Behandlungsabschnitt lediglich im Behandlungsbetrieb des Getränkeautomaten durchströmt, so dass eine klare Trennung zwischen dem Hauptkanal und dem Behandlungsabschnitt im Regelbetrieb geschaffen ist.

Dabei kann der Einlasskanal stromab der Fördereinrichtung über eine Abzweigstelle des Hauptkanals ab und verbindet die Abzweigstelle mit dem Behälteranschluss. Der Auslasskanal verbindet eine stromauf der Fördereinrichtung im Hauptkanal angeordnete Einlassstelle mit der Mischkammer. In der Einlassstellung der Ventileinrichtung führt dabei ein Strömungspfad von Wasser über die Abzweigstelle durch den Einlasskanal und über den Behälteranschluss zum Behandlungsmittel, wogegen in der Auslassstellung der Ventileinrichtung ein Strömungspfad der Lösung von der Mischkammer über die Einlassstelle zum Hauptkanal führt. Somit lässt sich der Behandlungsabschnitt vereinfacht realisieren.

In der Neutralstellung der Ventileinrichtung ist zweckmäßig eine Durchströmung des Einlasskanals und des Auslasskanals gesperrt, so dass weder Wasser zum Behandlungsmittel strömen kann, noch eine fluidische Verbindung zwischen der Mischkammer und dem Hauptkanal besteht.

Die Ventileinrichtung ist prinzipiell beliebig ausgestaltet. Insbesondere ist es vorstellbar, die Ventileinrichtung mit mehreren einzelnen Ventilen zu versehen, welche jeweils eine fluidische Verbindung zwischen den unterschiedlichen Kanälen und Anschlüssen freigeben und sperren können.

Vorteilhaft sind Ausführungsformen, bei denen die Ventileinrichtung als ein Mehrwegeventil ausgebildet ist.

Bevorzugt ist es dabei, wenn der Hauptkanal durch den Mehrwegeventil führt, wobei das Mehrwegeventil zudem fluidisch mit dem Behandlungsabschnitt verbunden ist. Das Mehrwegeventil weist also insbesondere für den jeweiligen Behälter und somit für den zugehörigen Behälteranschluss des Behälters einen zugehörigen Anschluss, nachfolgend auch Ventilanschluss genannt, auf.

Bevorzugt ist es ferner, wenn das Durchführen des Hauptkanals durch das Mehrwegeventil derart erfolgt, dass sich der Hauptkanal in drei Abschnitte unterteilen lässt, nämlich einen Wasserversorgungsabschnitt, der von der Wasserquelle bis zum Mehrwegeventil führt, einen Zwischenabschnitt, der beidseitig mit dem Mehrwegeventil verbunden ist und in dem insbesondere die Fördereinrichtung angeordnet ist, sowie einen Auslassabschnitt, welcher das Mehrwegeventil mit der Ausgabestelle verbindet. In diesem Fall weist das Mehrwegeventil also einen Ventilanschluss auf, der mit dem Versorgungsabschnitt und somit mit der Wasserquelle verbunden ist. Das Mehrwegeventil weist zudem einen Ventilanschluss auf, der über den Ausgabenabschnitt mit der Ausgabestelle verbunden ist. Zudem weist das Mehrwegeventil zwei Ventilanschlüsse für den Zwischenabschnitt auf. Vorteilhaft ist es ferner, wenn das Mehrwegeventil für den jeweiligen Behälter und somit für den jeweiligen Behälteranschluss einen zugehörigen Ventilanschluss aufweist. Weist der Getränkeautomat also lediglich einen solchen Behälter bzw. Behälteranschluss auf, so ist ein weiterer Ventilanschluss vorgesehen, der über den Behandlungsabschnitt mit dem Behälteranschluss verbunden ist. Für den jeweils weiteren Behälter und somit Behälteranschluss ist, soweit vorhanden, jeweils ein weiterer Ventilanschlüsse vorgesehen. Auf diese Weise ist es möglich, mit dem gleichen Mehrwegeventil einerseits in der Einlassstellung Wasser aus der Wasserquelle zum Behandlungsmittel zu fördern und in der Auslassstellung aus der Mischkammer durch das Fluidsystem, insbesondere durch den Zwischenabschnitt und den Auslassabschnitt, zu fördern, so dass diese jeweils behandelt werden. In einer Neutralstellung des Mehrwegeventils erfolgt vorteilhaft das Durchströmen ausschließlich des Hauptkanals, so dass das Wasser von der Wasserquelle über den Zwischenabschnitt und den Auslassabschnitt zur Ausgabestelle gelangt. Es erfolgt also eine sehr kompakte, einfache sowie effiziente Umsetzung der erfindungsgemäßen Idee. Sofern zwei oder mehr Behälter vorgesehen sind, können dem jeweiligen Behälter bzw. dem Behälteranschluss des Behälters eine eigene Einlassstellung und eine eigene Auslassstellung des Mehrwegeventils zugeordnet sein, so dass Wasser gezielt in die zugehörige Mischkammer eingebracht und daraus gefördert werden kann.

Das Mehrwegeventil kann dabei prinzipiell beliebig ausgestaltet sein. Insbesondere handelt es sich bei dem Mehrwegeventil um ein mehrere relativ zueinander drehbare Scheiben mit Ventilöffnungen aufweisendes Scheibenventil, wobei zumindest eine der Scheiben aus Keramik hergestellt sein kann. Dies ermöglicht eine kompakte Bauweise des Mehrwegeventils bei verlängerter Lebensdauer und zudem einen Betrieb mit reduziertem, insbesondere keinem, Schmiermittel.

Die Mischkammer kann in dem Behälter ausgebildet sein. Insbesondere kann die Mischkammer an die Aufnahmekammer angrenzen und/oder Bestandteil der Aufnahmekammer sein. Somit ist es möglich, die Herstellung der Lösung gänzlich aus dem Fluidsystem auszulagern.

Ebenso ist es denkbar, die Mischkammer außerhalb des Behälters auszubilden. Die Mischkammer ist also insbesondere Bestandteil des Behandlungsabschnitts des Fluidsystems. Auf diese Weise ist es möglich, im Behälter mehr Behandlungsmittel zu bevorraten.

Auch ist es möglich, die Mischkammer teilweise im Behälter und teilweise außerhalb des Behälters, insbesondere im Behandlungsabschnitt auszubilden.

Der Getränkeautomat weist vorteilhaft eine Erkennungseinrichtung auf, mit der ein Füllstand des Behandlungsmittels im Behälter erkannt wird. Dies führt zu einer weiteren Komforterhöhung für den Nutzer. Darüber hinaus wird hierdurch vermieden, dass keine Behandlung des Fluidsystems durchgeführt wird, obwohl ein entsprechender Bedarf besteht.

Die Erkennungseinrichtung kann prinzipiell derart ausgestattet sein, dass ein Nutzer des Getränkeautomaten den Füllstand optisch erkennt. Hierzu kann der Behälter zumindest teilweise optisch transparent ausgebildet sein.

Die Erkennungseinrichtung ist vorteilhaft derart ausgestaltet, dass sie den Füllstand überwacht und bei einem vorgegebenen Wert des Füllstands und/oder wenn im Behälter kein Behandlungsmittel mehr vorhanden ist, eine entsprechende Meldung erzeugt und/oder ausgibt. Insbesondere ist es vorstellbar, im Behälter einen Magneten anzuordnen, der derart im Behälter angeordnet ist, dass er dem Füllstand des Behandlungsmittels folgt. Hierzu kann der Magnet am Behandlungsmittel angebracht und/oder auf dem Behandlungsmittel aufgelegt sein. Die Erkennungseinrichtung kann vorteilhaft ferner einen Sensor, insbesondere ein Read-Relais oder eine Reed-Schaltung aufweisen, der die Position oder eine vorgegebene Position des Magneten erkennt, um einen entsprechenden Füllstand des Behälters mit Behandlungsmittel zu erkennen und/oder zu signalisieren.

Der Behälter kann prinzipiell dauerhaft am Getränkeautomaten angebracht und am Fluidsystem angeschlossen sein. Vorteilhaft ist der Behälter in diesem Fall mit Behandlungsmittel nachfüllbar. Hierzu kann der Behälter einen entsprechenden Deckel und dergleichen aufweisen.

Zu denken ist auch an Ausführungsformen, bei denen der Behälter austauschbar ist, so dass er am Getränkeautomaten angebracht ist und bei Bedarf ausgetauscht werden kann. Somit lässt sich der Behälter insbesondere austauschen, wenn das Behandlungsmittel aufgebraucht ist und/oder wenn ein anderes Behandlungsmittel zum Einsatz kommen soll.

Selbstverständlich kann der Getränkeautomat auch zwei oder mehr solche Behandlungsmittelbehälter aufweisen, die voneinander separat sind und in denen jeweils ein Behandlungsmittel bevorratet ist. Der jeweilige Behälter weist dabei einen Behälteranschluss auf, über den er mit dem Behandlungsabschnitt verbunden ist. Insbesondere ist es vorstellbar, zumindest zwei der Behälter mit derselben Abzweigstelle zu verbinden. Somit kann dem jeweiligen Behälter vereinfacht Wasser zugeführt werden. Vorstellbar ist es ebenso, wenigstens zwei der Behälter über jeweils separaten, zugehörigen Einlassstellen mit dem Hauptkanal zu verbinden. Auf diese Weise ist es möglich, über die jeweilige Einlassstelle eine andere Lösung in den Hauptkanal zu fördern, um diesen zu behandeln.

Bevorzugt sind Ausführungsformen, bei denen der Behälter eine vom Behälteranschluss separate, vorzugsweise zum Behälteranschluss beabstandete, Entlüftungsöffnung aufweist. Die Entlüftungsöffnung dient dem Zweck, in der Aufnahmekammer und/oder in der Mischkammer einen Druckausgleich zu realisieren, um beim Einbringen von Wasser in den Behälter Druck abzubauen und/oder beim Fördern der Lösung aus der Mischkammer Unterdruck auszugleichen.

Denkbar ist auch ein elastischer Deckel, der sich beim Einbringen von Wasser in den Behandlungsmittelbehälter ausdehnt und beim Auslassen der Lösung und/oder des Wassers aus dem Behandlungsmittelbehälter zusammenzieht. In diesem Fall weist der Behandlungsmittelbehälter vorteilhaft ein Sicherheitsventil aus, das insbesondere beim Überdruck im Behandlungsmittelbehälter öffnet und somit für einen Druckausgleich sorgt.

Es versteht sich, dass neben dem Getränkeautomaten und dem Verfahren zum Betreiben des Getränkeautomaten auch ein solcher Behandlungsmittelbehälter bzw. ein Verkaufsgebinde aus dem Behälter und dem Behandlungsmittel zum Umfang dieser Erfindung gehört.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch
- Fig. 1: eine stark vereinfachte, schaltplanartige Darstellung eines Getränkeautomaten mit einem Behandlungsmittelbehälter,
- Fig. 2: einen stark vereinfachten Schnitt durch den Getränkeautomaten im Bereich des Behandlungsmittelbehälters,
- Fig. 3: eine stark vereinfachte, schaltplanartige Darstellung des Getränkeautomaten bei einem anderen Ausführungsbeispiel,
- Fig. 4 bis 7: eine Teilansicht im Bereich einer Ventileinrichtung des Getränkeautomaten aus Fig. 3 bei jeweils unterschiedlicher Stellung.

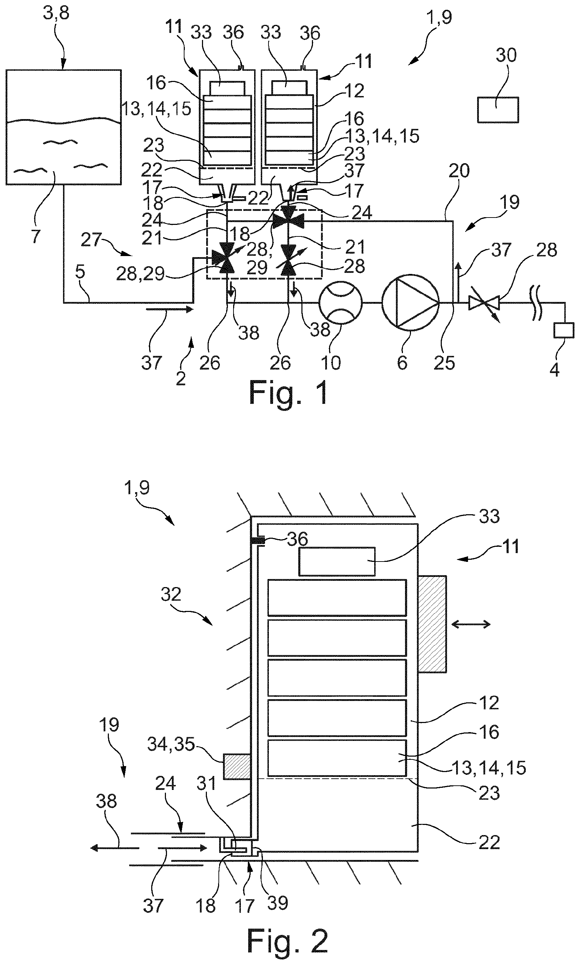

Ein Getränkeautomat 1, wie er in Fig. 1 stark vereinfacht und schaltplanartig dargestellt ist, weist ein Fluidsystem 2 auf, welches eine Wasserquelle 3 fluidisch mit einer Ausgabestelle 4 des Getränkeautomaten 1 zur Ausgabe eines Getränks verbindet. Hierzu weist das Fluidsystem 2 einen Hauptkanal 5 auf, der von der Wasserquelle 3 bis zur Ausgabestelle 4 führt. Im Hauptkanal 5 ist eine Fördereinrichtung 6 zum Fördern von Wasser 7 angeordnet, welches von der Wasserquelle 3 stammt. Im gezeigten Beispiel ist die Wasserquelle 3 ein Wassertank 8, in welchem das Wasser 7 nachfüllbar bevorratet ist. Der Getränkeautomat 1 kann zudem eine Temperiereinrichtung zum Temperieren des Wassers 7 (nicht gezeigt) und eine Einrichtung (nicht gezeigt), in der mit dem Wasser 7 ein Getränk, beispielsweise Kaffee oder Tee, zubereitet wird, aufweisen, die jeweils im Hauptkanal 5 angeordnet sind und nachfolgend allgemein als weitere Bestandteile bezeichnet werden. Der Getränkeautomat 1 ist also insbesondere als ein Kaffeeautomat 9 ausgebildet. Im gezeigten Beispiel weist der Getränkeautomat 1 ferner einen Durchflussmesser 10 zum Messen des durch den Hauptkanal 5 strömenden Volumens auf, der im Beispiel stromauf der Fördereinrichtung 6 angeordnet ist.

Zum Behandeln des Fluidsystems 2, insbesondere auch der weiteren Bestandteile, weist der Getränkeautomat 1 einen Behandlungsmittelbehälter 11, nachfolgend auch kurz Behälter 11 genannt, auf, der eine Aufnahmekammer 12 aufweist, in der ein festes Behandlungsmittel 13 bevorratet ist. Mit dem Behandlungsmittel 13 ist es möglich, das Fluidsystem 2 und/oder die weiteren Bestandteile zu behandeln, insbesondere zu reinigen und/oder zu entkalken. Dementsprechend handelt es sich bei dem Behandlungsmittel 13 um ein Entkalkungsmittel 14 und/oder ein Reinigungsmittel 15. Im gezeigten Beispiel ist in dem Behälter 11 eine Vielzahl von aufeinander gestapelten Tabletten 16 des Behandlungsmittels 13 in der Aufnahmekammer 12 bevorratet. Der Behälter 11 weist ferner einen Behälteranschluss 17 mit einer Öffnung 18 auf, über welche der Behälter 11 mit dem Fluidsystem 2 verbunden ist. Die Verbindung des Fluidsystems 2 mit dem Behälter 11 erfolgt über einen Behandlungsabschnitt 19 des Fluidsystems 2, der im gezeigten Beispiel einen Einlasskanal 20 sowie einen Auslasskanal 21 aufweist. Der Einlasskanal 20 dient dem Einlassen von Wasser 7 in den Behälter 11, derart, dass das Wasser 7 mit dem Behandlungsmittel 13 in Kontakt steht, so dass in einer Mischkammer 22 eine Lösung (nicht gezeigt) des Behandlungsmittels 13 mit Wasser 7 hergestellt bzw. gebildet wird. Im gezeigten Beispiel ist die Mischkammer 22 im Behälter 11 angeordnet und grenzt an die Aufnahmekammer 12 an, wobei im Übergangsbereich zwischen der Aufnahmekammer 12 und der Mischkammer 22 ein durchströmbares Gitter 23 angeordnet ist, auf dem das Behandlungsmittel 13 aufliegt. Zwischen dem Einlasskanal 20 und dem Behälteranschluss 17 mit der Öffnung 18 verläuft hierbei ein Verbindungskanal 24, der den Einlasskanal 20 fluidisch mit der Öffnung 18 verbindet. Der Auslasskanal 21 dient dem Auslassen der Lösung aus der Mischkammer 22 und deren Zuführung zum Hauptkanal 5 zum Behandeln des Hauptkanals 8 sowie der weiteren Bestandteile mit der Lösung. Hierbei verläuft der Auslasskanal 21 von dem Verbindungskanal 24 bis zum Hauptkanal 5. Das heißt, dass sowohl das Einbringen des Wassers 7 in den Behälter 11 als auch das Auslassen der Lösung aus der Mischkammer 23 über dieselbe Öffnung 18 und somit demselben Behälteranschluss 17 des Behälters 11 erfolgt. Hierbei verläuft der Einlasskanal 20 von einer stromab der Fördereinrichtung 6 im Hauptkanal 2 angeordneten Abzweigstelle 25 bis zum Verbindungskanal 24. Der Auslasskanal 21 verläuft vom Verbindungskanal 24 bis zu einer stromauf der Fördereinrichtung 6, vorliegend auch stromauf des Durchflussmessers 10, angeordneten Einlassstelle 26.

Im gezeigten Beispiel weist der Getränkeautomat 1 zwei derartige Behälter 11 auf, in denen unterschiedliche feste Behandlungsmittel 13 bevorratet sein können. Beispielsweise kann in einem der Behälter 11 ein Entkalkungsmittel 14 und in dem anderen Behälter 11 ein Reinigungsmittel 15 bevorratet sein. Hierbei ist für beide Behälter 11 derselbe Einlasskanal 20 vorgesehen. Das heißt der gemeinsamer Einlasskanal 20 zweigt an der Abzweigstelle 25 vom Hauptkanal 5 ab und verläuft bis zum Verbindungskanal 14 des einen Behälters 11 und weiter zum Verbindungskanal 24 des anderen Behälters 11. Demgegenüber ist für den jeweiligen Behälter 11 ein zugehöriger Auslasskanal 21 vorgesehen, wobei im gezeigten Beispiel ferner für den jeweiligen Behälter 11 eine zugehörige Einlassstelle 26 vorgesehen ist.

Der Getränkeautomat 1 weist ferner eine Ventileinrichtung 27 auf, mit der die jeweiligen Kanäle 5, 20, 21, 24 freigegeben und gesperrt werde können. Im gezeigten Beispiel weist die Ventileinrichtung 27 stromab der Fördereinrichtung 6 sowie im jeweiligen Auslasskanal 21 jeweils ein zugehöriges Ventil 28 auf. Stromauf des Durchflussmessers 10 und stromab der Wasserquelle 3 führt der Hauptkanal 5 über eines dieser Ventile 28, das als Dreiwegeventil 29 ausgebildet ist. Somit ist es möglich, die Wasserquelle 3 aktiv fluidisch vom restlichen Fluidsystem 2 zu trennen. Zudem ist im Einlasskanal 20 ein Dreiwegeventil 29 derart angeordnet, dass die fluidische Verbindung zwischen dem jeweiligen Verbindungskanal 24 und somit Behälter 11 und dem Einlasskanal 20 wahlweise gesperrt und freigegeben werden kann. Der Getränkeautomat 1 weist ferner eine Steuereinrichtung 30 auf, die kommunizierend mit der Ventileinrichtung 27 und somit mit dem jeweiligen Ventil 28, 29, der Fördereinrichtung 6 sowie dem Durchflussmesser 10 verbunden ist, derart, dass die Steuereinrichtung 30 im Betrieb die Ventileinrichtung 27 und die Fördereinrichtung 6 steuert.

Fig. 2 zeigt einen vereinfachten Schnitt durch den Getränkeautomaten 1 im Bereich einer der Behälter 11. Zu erkennen ist dabei, dass die Öffnung 18 des Behälters 11 mit Hilfe eines Stanzelements 31 in den Behälteranschluss 17 eingebracht ist, wobei das Stanzelement 31 im Verbindungskanal 24 angeordnet ist, derart, dass beim Anbringen des Behälters 11 der zuvor, im gezeigten Beispiel durch eine Dichtung 39,verschlossene Behälteranschluss 17 durchstochen und somit mit der Öffnung 18 versehen wird. Zu erkennen ist ferner, dass der Getränkeautomat 1 eine Erkennungseinrichtung 32 zum Erkennen des Füllstands des Behälters 11 mit dem Behandlungsmittel 13 aufweist. Im gezeigten Beispiel weist die Erkennungseinrichtung 32 einen im Behälter 11 angeordneten Magneten 33 auf, der auf der vom Gitter 23 bzw. der Mischkammer 22 abgewandten Seite des Behandlungsmittels 13 auf dem Behandlungsmittel 13 aufliegt, derart, dass sich der Magnet 33 mit abnehmendem bzw. verbrauchtem Behandlungsmittel 13 in Richtung des Gitters 23 bewegt. Die Erkennungseinrichtung 32 weist ferner einen Sensor 34, insbesondere eine Reed-Schaltung 35, auf, der einen niedrigen Füllstand des Behälters 11 mit dem Behandlungsmittel 13 erkennt und der Steuereinrichtung 30 mitteilt, so dass das Nachfüllen des Behandlungsmittels 13 und/oder der Austausch des Behälters 11 einem Nutzer des Getränkeautomaten 1 signalisiert, insbesondere angezeigt, wird. Der Sensor 34, insbesondere die Reed-Schaltung 35, ist im Beispiel im Bereich des Gitters 23, im gezeigten Beispiel ferner außerhalb des Behälters 11, angeordnet.

Zu erkennen ist ferner, dass der Behälter 11 eine Entlüftungsöffnung 36 aufweist, der dem Druckausgleich im Behälter 11, insbesondere in der Aufnahmekammer 12 und/oder der Mischkammer 22, dient. Über die Entlüftungsöffnung 36 kann also ein Unterdruck und/oder Überdruck im Behälter 11 ausgeglichen werden. Alternativ oder zusätzlich kann zu diesem Zweck ein nicht gezeigter Deckel des Behälters 11 vorgesehen sein.

Zum Behandeln des Fluidsystems 2, insbesondere des Hauptkanals 8 und/oder der weiteren Bestandteile, wird der Getränkeautomat 1 in einem Behandlungsbetrieb betrieben. In dem Behandlungsbetrieb wird ein vorgegebenes Volumen Wasser 7, welches mit dem Durchflussmesser 10 überprüft werden kann, mit dem Behandlungsmittel 13 in Kontakt gebracht, so dass sich in der Mischkammer 22 die Lösung aus Wasser 7 und Behandlungsmittel 13, bevorzugt mit vorgegebenem Anteil an Behandlungsmittel und somit vorgegebener Konzentration, bildet. Anschließend wird die Lösung in das Fluidsystem 2, insbesondere in den Hauptkanal 5 eingebracht, um eine Behandlung des Fluidsystems 2 durchzuführen. Hierzu erfolgt eine Wechselwirkung der Lösung mit dem Fluidsystem 2 für eine vorgegebene Dauer. Anschließend wird die Lösung, insbesondere über die Ausgabestelle 4, aus dem Fluidsystem 2 ausgelassen. Anschließend wird das Fluidsystem 2, insbesondere der Hauptkanal 5, bevorzugt mit Wasser 7 durchgespült.

Im Behandlungsbetrieb wird dabei die Ventileinrichtung 27 in eine Einlassstellung verstellt, derart, dass die Fördereinrichtung 6 Wasser 7 aus der Wasserquelle 3 zum Behandlungsmittel 23, vorliegend in die Mischkammer 22, fördert. In der Einlassstellung wird also Wasser 7 über die Fördereinrichtung 6 gefördert und über die Abzweigstelle 25 und den Einlasskanal 20 in die Mischkammer 22 eingebracht, so dass ein Strömungspfad 37 von Wasser 7 über die Abzweigstelle 25 durch den Einlasskanal 20 und in die Mischkammer 22 des entsprechenden Behälters 11 führt. Dies erfolgt derart, dass lediglich der dem Gitter 23 benachbarte Bereich des Behandlungsmittels 13 mit dem Wasser 7 in Kontakt steht, das Wasser 7 die Aufnahmekammer 12 also nicht füllt. Bevorzugt erfolgt dies derart, dass das Wasser 7 lediglich mit der dem Gitter 23 nächstbenachbarten Tablette 16 in Kontakt steht. Im gezeigten Beispiel ist das vorgegebene Volumen des Wassers 7 derart gewählt, dass die Mischkammer 22 mit Wasser gefüllt ist und lediglich im Bereich des Gitters 23 mit dem Behandlungsmittel 13 in Kontakt steht, um die Lösung zu bilden bzw. herzustellen. Weist die Lösung die gewünschte Konzentration auf, wird die Ventileinrichtung 27 in eine Auslassstellung verstellt, derart, dass die Lösung aus der Mischkammer 22 über den Auslasskanal 21 des zugehörigen Behälters 11 mit der Fördereinrichtung 6 zum Hauptkanal 5 gefördert wird. In der Auslassstellung wird also die Lösung mit Hilfe der Fördereinrichtung 6 aus der Mischkammer 22 in den zugehörigen Auslasskanal 21 und über die zugehörige Einlassstelle 26 in den Hauptkanal 5 gefördert. In der Auslassstellung führt also ein Strömungspfad 38 der Lösung aus der Mischkammer 22 über den Behälteranschluss 17 und die Öffnung 18 zum zugehörigen Auslasskanal 21 und über die zugehörige Einlassstelle 26 in den Hauptkanal 5.

Eine Verteilung der Lösung im Hauptkanal 5 erfolgt mit Hilfe des stromab der Fördereinrichtung 6 im Hauptkanal 5 angeordneten Ventils 28.

In einem Regelbetrieb des Getränkeautomaten 1 zur Ausgabe von Getränken über die Ausgabestelle 4 wird die Ventileinrichtung 27 in eine Neutralstellung verstellt, in welcher der Einlasskanal 20 und der jeweilige Auslasskanal 21 gesperrt sind.

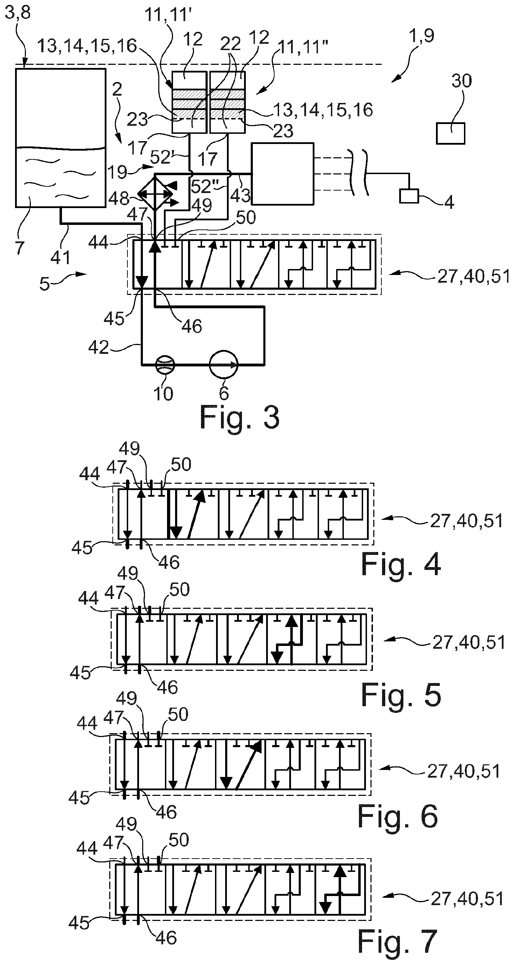

In Figur 3 ist ein anderes Ausführungsbeispiel des Getränkeautomaten 1 dargestellt. Dieses Ausführungsbeispiel unterscheidet sich von dem in Figur 1 gezeigten Beispiel durch die Ausgestaltung der Ventileinrichtung 27, die im gezeigten Beispiel als ein einziges Mehrwegeventil 40 ausgebildet ist. Dabei verläuft der Hauptkanal 5 durch das Mehrwegeventil 40. Somit ist der Hauptkanal 5 in drei unterschiedliche Abschnitte 41, 42, 43 unterteilt, nämlich in einen Versorgungsabschnitt 41, der von der Wasserquelle 3 bis zu einem ersten Anschluss 44 des Mehrwegeventils 27, nachfolgend erster Ventilanschluss 44 genannt, verläuft, einen Zwischenabschnitt 42, der von einem zweiten Ventilanschluss 45 bis zu einem dritten Ventilanschluss 46 des Mehrwegeventils 40 verläuft, und einen Auslassabschnitt 43, der an einem vierten Ventilanschluss 47 des Mehrwegeventils 40 angeschlossen ist und den vierten Ventilanschluss 47 fluidisch mit der Ausgabestelle 4 verbindet. Im gezeigten Beispiel ist die Fördereinrichtung 6 im Zwischenabschnitt 42 angeordnet. Gleiches gilt für den Durchflussmesser 10. In dem gezeigten Beispiel ist zudem eine Heizeinrichtung 48 gezeigt, welche im Auslassabschnitt 43 angeordnet ist und dem Heizen des durch den Auslassabschnitt 43 strömenden Fluids, also insbesondere von Wasser 7, dient. Zudem ist für den jeweiligen Behälter 11 ein zugehöriger Ventilanschluss 49, 50 vorgesehen. Im gezeigten Beispiel, bei dem zwei Behälter 11, nämlich ein erster Behälter 11' und ein zweite Behälter 11", vorgesehen sind, ist also für den jeweiligen Behälter 11 bzw. den zugehörigen Behälteranschluss 17 jeweils ein zugehöriger Ventilanschluss 49, 50 vorgesehen, nämlich ein fünfter Ventilanschluss 49 für den ersten Behälter 11, 11' und ein sechster Ventilanschluss 50 für den zweiten Behälter 11, 11". Dabei verläuft ein jeweils zugehöriger Behandlungsabschnittskanal 52', 52" des Behandlungsabschnitts 19 zwischen dem jeweiligen Behälteranschluss 17 und dem zugehörigen Ventilanschluss 49, 50. Das heißt, dass ein erster Behandlungsabschnittskanal 52' vom fünften Ventilanschluss 49 zum Behälteranschluss 17 des ersten Behälters 11' und ein zweiter Behandlungsabschnittskanal 52" vom sechsten Ventilanschluss 50 zum Behälteranschluss 17 des zweiten Behälters 11" führt. Das Mehrwegeventil 40 ist vorzugsweise als ein Scheibenventil mit zumindest einer, nicht gezeigten, Scheibe aus Keramik ausgebildet.

In Figur 3 ist dabei die Neutralstellung der Ventileinrichtung 27 gezeigt, wobei in dieser Neutralstellung über die Ventileinrichtung 27 eine Strömung durch den gesamten Hauptkanal 5 freigegeben wird, so dass Wasser 7 über den Versorgungsabschnitt 41 und das Mehrwegeventil 40 zum Zwischenabschnitt 42 und anschließend über das Mehrwegeventil 40 zum Auslassabschnitt 43 gelangt. Dabei wird das Wasser mit Hilfe der Fördereinrichtung 6 gefördert. Der Strömungsweg des Wassers 7 ist dabei zum besseren Verständnis durch eine dickere Darstellung der jeweiligen fluidischen Wege angedeutet.

Die Figuren 4 bis 7 zeigen andere Stellungen des Mehrwegeventils 40, wobei, wie in Figur 3, die jeweils unterschiedlichen Stellungen des Mehrwegeventils 40 durch entsprechend dickere Darstellungen der jeweiligen fluidischen Wege angedeutet sind.

In Figur 4 ist eine erste Einlassstellung des Mehrwegeventils 40 zum Einlassen von Wasser 7 in den ersten Behälter 11' bzw. in die Mischkammer 22 des ersten Behälters 11' dargestellt. In dieser Stellung ist eine fluidische Verbindung zwischen dem ersten Ventilanschluss 44, dem zweiten Ventilanschluss 45, dem dritten Ventilanschluss 46 sowie dem fünften Ventilanschluss 49 hergestellt, wogegen die anderen Ventilanschlüsse 47, 50 von diesen fluidisch getrennt und gesperrt sind. Dementsprechend fördert die Fördereinrichtung 6 Wasser 7 aus der Wasserquelle 8 und über den Versorgungskanal 41, den Zwischenkanal 42 sowie den ersten Behandlungsabschnittskanal 52' und den Behälteranschluss 17 des ersten Behälters 11' in die Mischkammer 22 des ersten Behälters 11'.

Figur 5 zeigt eine erste Auslassstellung des Mehrwegeventils 40, wobei in dieser ersten Auslassstellung die Lösung aus der Mischkammer 22 des ersten Behälters 11' zum Behandeln des Fluidsystems 2 aus der Mischkammer 22 gefördert wird. Zu diesem Zweck sind der zweite Ventilanschluss 45, der dritte Ventilanschluss 46, der vierte Ventilanschluss 47 sowie der fünfte Ventilanschluss 49 fluidisch derart miteinander verbunden, dass die Fördereinrichtung 6 die Lösung aus der Mischkammer 22 des ersten Behälters 11' über den Behälteranschluss 17 des ersten Behälters 11', den ersten Behandlungsabschnittskanal 52' und den Zwischenabschnitt 42 fördert und anschließend in den Auslassabschnitt 43 einbringt.

Die Figuren 6 und 7 zeigen, analog zu den Figuren 4 und 5, eine zweite Einlassstellung sowie eine zweite Auslassstellung des Mehrwegeventils 40 zum Einbringen von Wasser 7 aus der Wasserquelle 3 in die Mischkammer 22 des zweiten Behälters 11" über den zweiten Behandlungsabschnittskanal 52" und den Behälteranschluss 17 des zweiten Behälters bzw. zum Fördern der in der Mischkammer 22 des zweiten Behälters 11' entstehenden Lösung zum Behandeln des Fluidsystems 2 über den Behälteranschluss 17 des zweiten Behälters 11" und den zweiten Behandlungsabschnittskanal 52". Dabei sind in der in Figur 6 gezeigten zweiten Einlassstellung der erste Ventilanschluss 44, der zweite Ventilanschluss 45, der dritte Ventilanschluss 46 sowie der sechste Ventilanschluss 50 fluidisch miteinander verbunden. In der zweiten Auslassstellung, die in Figur 7 dargestellt ist, sind der zweite Ventilanschluss 45, der dritte Ventilanschluss 46, der vierte Ventilanschluss 47 sowie der sechste Ventilanschluss 50 fluidisch miteinander verbunden.

Im gezeigten Bespiel weist das Mehrwegeventil 40 also sechs Ventilanschlüsse 44, 45, 46, 47, 49, 50 auf und ist in fünf verschiedenen Stellungen verstellbar und somit ein 6/5 Mehrwegeventil.

### Bezugszeichenliste

- 1: Getränkeautomat
- 2: Fluidsystem
- 3: Wasserquelle
- 4: Ausgabestelle
- 5: Hauptkanal
- 6: Fördereinrichtung
- 7: Wasser
- 8: Wassertank
- 9: Kaffeeautomat
- 10: Durchflussmesser
- 11: Behandlungsmittelbehälter
- 12: Aufnahmekammer
- 13: Behandlungsmittel
- 14: Entkalkungsmittel
- 15: Reinigungsmittel
- 16: Tablette
- 17: Behälteranschluss
- 18: Öffnung
- 19: Behandlungsabschnitt
- 20: Einlasskanal
- 21: Auslasskanal
- 22: Mischkammer
- 23: Gitter
- 24: Verbindungskanal
- 25: Abzweigstelle
- 26: Einlassstelle
- 27: Ventileinrichtung
- 28: Ventil
- 29: Dreiwegeventil
- 30: Steuereinrichtung
- 31: Stanzelement
- 32: Erkennungseinrichtung
- 33: Magnet
- 34: Sensor
- 35: Reed-Schaltung
- 36: Entlüftungsöffnung
- 37: Strömungspfad
- 38: Strömungspfad
- 39: Dichtung
- 40: Mehrwegeventil
- 41: Versorgungsabschnitt
- 42: Zwischenabschnitt
- 43: Auslassabschnitt
- 44: 1. Ventilanschluss
- 45: 2. Ventilanschluss
- 46: 3. Ventilanschluss
- 47: 4. Ventilanschluss
- 48: Heizeinrichtung
- 49: 5. Ventilanschluss / Ventilanschluss für Behälter
- 50: 6. Ventilanschluss / Ventilanschluss für Behälter
- 51: Scheibenventil
- 52: Behandlungsabschnittskanäle

## Patentansprüche

1. Getränkeautomat (1), insbesondere Kaffeeautomat (9), mit einem Fluidsystem (2), das eine Wasserquelle (3) fluidisch mit einer Ausgabestelle (4) des Getränkeautomaten (1) verbindet, durch welche der Getränkeautomat (1) im Regelbetrieb ein Getränk ausgibt; und mit einer Fördereinrichtung (6) zum Fördern von Wasser (7) durch das Fluidsystem (2); und mit einem Behandlungsmittelbehälter (11), der eine Aufnahmekammer (12) aufweist, in der ein festes Behandlungsmittel (13) bevorratet ist und der einen Behälteranschluss (17) aufweist, über welchen der Behandlungsmittelbehälter (11) mit einem Behandlungsabschnitt (19) des Fluidsystems (2) fluidisch verbunden ist; und mit einer Ventileinrichtung (27) zum Steuern zumindest einer fluidischen Verbindung des Behandlungsabschnitts (19), **dadurch gekennzeichnet, dass** die Ventileinrichtung (27) zwischen einer Einlassstellung und einer Auslassstellung verstellbar ist, derart dass die Ventileinrichtung in der Einlassstellung den Behandlungsmittelbehälter (11) über den Behandlungsabschnitt (19) mit der Wasserquelle (3) derart verbindet, dass die Fördereinrichtung (6) Wasser (7) aus der Wasserquelle (3) zum Behandlungsmittel (13) fördert, so dass sich in einer Mischkammer (22) eine Lösung aus Wasser (7) und Behandlungsmittel (13) bildet; und dass in der Auslassstellung der Ventileinrichtung (27) die Fördereinrichtung (6) die Lösung aus der Mischkammer (22) fördert und zum Behandeln des Fluidsystems (2) in das Fluidsystem (2) einbringt.

2. Getränkeautomat nach Anspruch 1, **dadurch gekennzeichnet, dass** das Behandlungsmittel (13) die Mischkammer (22) derart begrenzt, dass das Behandlungsmittel (13) in der Einlassstellung lediglich im der Mischkammer (22) nahen Bereich mit dem Wasser (7) in Kontakt steht.

3. Getränkeautomat nach Anspruch 2, **dadurch gekennzeichnet, dass** in der Mischkammer (22) ein durchströmbares Gitter (23) angeordnet ist und das Behandlungsmittel (13) auf dem Gitter (23) aufliegt.

4. Getränkeautomat nach einem der Ansprüche 1 bis 3, **dadurch gekennzeichnet, dass** die Ventileinrichtung (27) als ein Mehrwegeventil (40) ausgebildet ist, welches mit einem ersten Ventilanschluss (44) mit der Wasserquelle (3), mit einem vierten Ventilanschluss (47) mit der Ausgabestelle (4), mit einem zweiten Ventilanschluss (45) und einem dritten Ventilanschluss (46) mit einem Zwischenabschnitt (42) des Hauptkanals (5), in welchem die Fördereinrichtung (6) eingebunden ist, und mit einem weiteren Ventilanschluss (49, 50) mit dem Behälteranschluss (17) fluidisch verbunden ist.

5. Getränkeautomat nach einem der Ansprüche 1 bis 4, **dadurch gekennzeichnet, dass** die Mischkammer (22) zumindest teilweise im Behandlungsmittelbehälter (11) ausgebildet ist und/oder dass die Mischkammer (22) zumindest teilweise außerhalb des Behandlungsmittelbehälters (11) ausgebildet ist.

6. Getränkeautomat nach einem der Ansprüche 1 bis 5, **dadurch gekennzeichnet, dass** der Getränkeautomat (1) eine Erkennungseinrichtung (32) zur Erkennung des Füllstands des Behandlungsmittelbehälters (11) mit Behandlungsmittel (13) aufweist.

7. Getränkeautomat nach einem der Ansprüche 1 bis 6, **dadurch gekennzeichnet, dass** der Behandlungsmittelbehälter (11) austauschbar und/oder mit Behandlungsmittel (13) nachfüllbar ist.

8. Getränkeautomat nach einem der Ansprüche 1 bis 7, **dadurch gekennzeichnet, dass** zwei solche Behandlungsmittelbehälter (11) vorgesehen sind, welche voneinander separat sind und jeweils über einen zugehörigen Behälteranschluss (17) mit dem Behandlungsabschnitt (19) verbunden sind.

9. Behandlungsmittelbehälter (11) für einen Getränkeautomaten (1) nach einem der Ansprüche 1 bis 8, mit einer Aufnahmekammer (12) zum Bevorraten des Behandlungsmittels (13) und mit einem Behälteranschluss (17), über den der Behandlungsmittelbehälter (11) an das Fluidsystem (2) anschließbar ist.

10. Verfahren zum Betreiben eines Getränkeautomaten (1) nach einem der Ansprüche 1 bis 8; wobei in einem Behandlungsbetrieb ein vorgegebenes Volumen Wasser (7) gefördert und mit dem Behandlungsmittel (13) in Kontakt gebracht wird, so dass sich die Lösung aus Wasser (7) und Behandlungsmittel (13) mit einem vorgegebenen Anteil von Behandlungsmittel (13) in der Mischkammer (22) bildet; wobei die Lösung in das Fluidsystem (2) gefördert wird, derart dass die Lösung für eine vorgegebene Dauer mit dem Fluidsystem (2) wechselwirkt; wobei die Lösung aus dem Fluidsystem (2) abgelassen wird.
